# EUROPEAN PATENT SPECIFICATION

(11) **EP 2 353 779 B1**
(45) Date of publication and mention of the grant of the patent: **25.01.2012**
(21) Application number: 10001232.7
(22) Date of filing: 05.02.2010
(51) Int. Cl.: B23Q 11/10, B23B 27/10

(54) **Cutting tool holder arrangement**
Halteanordnung für Schneidwerkzeuge
Agencement de support d'outils de découpage

(43) Date of publication of application: 10.08.2011
(73) Proprietor: University of Ljubljana, 1000 Ljubljana (SI)
(72) Inventor: Pusavec, Franci, 1000 Ljubljana (SI); Kopac, Janez, 1000 Ljubljana (SI)
(74) Representative: Schmidt, Karsten

(56) References cited:
- WO-A1-03/037555
- JP-A- 58 160 001
- US-A- 4 829 859
- US-A- 5 901 623
- US-A1- 2004 154 443

## Description

### Field of the invention

The present invention generally relates cutting tool holder arrangements for use in cryogenic machining. More particularly, the present invention relates to cutting tool holder arrangements, which are adapted to provide cooling fluid to a cutting zone of the machining tool, and which provide for the possibility of characterizing the thermodynamic state of the cooling fluid on-line.

### Background of the invention

Most machining operations are performed by cutting tools comprising a holder and one or more cutting inserts each having a top surface terminating with one or more cutting edges. The cutting edge of an insert makes contact with the workpiece to remove material therefrom in the form of chips. The shearing movement of the cutting edge relative to the workpiece generates a substantial amount of heat energy, sufficient to bring the cutting edge to temperatures of 800 to 1100°C.

Among the most common causes of failure of cutting inserts employed in prior art machining operations is abrasion at the cutting insert, which is particularly pronounced at elevated temperatures. In order to reduce abrasion at the cutting insert, improved materials, such as coated metals, have been developed. In addition to the improved materials and coatings used in the manufacture of cutting inserts, attempts have been made to increase tool life by reducing the temperature in the cutting zone, which is defined by the area surrounding the cutting edge of the insert, the insert-workpiece interface and the area on the workpiece where material is sheared to form chips. One method of cooling practiced in the prior art is flood cooling which involves the spraying of a low pressure stream of coolant towards the cutting zone. Typically, a nozzle disposed several millimeters or centimeters above the cutting tool and the workpiece directs a low pressure stream of coolant towards the workpiece, tool holder, cutting insert and on the chips being produced. Typical coolants are cooled synthetic oils and other non-volatile fluids with relatively high boiling points. These cooling fluids not only reduce the temperature at the cutting zone, but also they exert a lubricating effect.

It is furthermore known that cooling fluids with a very low boiling point (boiling temperature) can be used to cool a cutting zone of machining tools. Examples of such fluids are liquid nitrogen, liquid oxygen, liquid air, liquefied ammonia and liquefied volatile hydrocarbon gases, such as methane, ethane, propane, etc., and liquefied chlorofluorcarbon gases, such as Freon-12. These fluids also not only serve as coolant, but also serve as lubricants. Cooling with such cooling fluid is commonly referred to as cryogenic cooling.

There exists a relatively large body of prior art publications pertaining to cryogenic cooling of tools, including: WO 99/60079 (Hong) and U.S. Pat. No. 5,761,974 (Wang, et al.), U.S. Pat. No. 5,901,623 (Hong), U.S. Pat. No. 3,971,114 (Dudley), U.S. Pat. No. 5,103,701 (Lundin, et al.), U.S. Pat. No. 6,200,198 (Ukai, et al.), U.S. Pat. No. 5,509,335 (Emerson), and U.S. Pat. No. 4,829,859 (Yankoff).

When liquefied gases with very low boiling points are used as cooling fluids, a common problem is that the cooling fluid tends to evaporate while being transported from a thermally insulated storage container, such as a "dewar", to the machining tool. This is caused by the fact that pipes and tubes used for transporting cooling fluid from a storage container to the machining tool are normally non-ideally insulated, so that the cooling fluid, which will normally be in a liquid state when it leaves the storage container, increases its temperature and evaporates upon transport through the transport pipe or tube.

Evaporation of the cooling fluid is normally undesired, since the cooling fluid in gaseous form has far lower cooling capacity than has the same cooling fluid in liquid form. Also the lubricating effects of gaseous cooling fluids are inferior to the ones of liquid cooling fluids. This applies not only to completely gaseous fluids versus completely liquid cooling fluids, but also cooling fluids in partly gaseous/partly liquid phase (e.g. aerosols) are not preferred, since they also show inferior cooling and lubricating properties.

In view of the above mentioned state of the art, it is an object of the invention to improve the delivery of cooling fluid from a storage container to the machining tool by delivering the cooling fluid to the machining tool in a substantially liquid form.

### Summary of the invention

The present invention provides an improved cutting tool holder arrangement for effectively cooling cutting tools and objects to be machined, said arrangement comprising at least one temperature sensor.

The problem solved by the present invention must be seen as being the one of providing an improved cutting tool holder arrangement, rather than to provide a cutting tool holder arrangement which is capable of establishing a temperature. The solution to the latter problem would certainly be obvious, however, with regard to the first mentioned problem, it must be noted that the concept of measuring a temperature in a conduit of the cutting tool holder arrangement has nowhere been recognized or suggested in the prior art. The finding that establishing the temperature of a cooling fluid in a cutting tool holder arrangement is useful for improving control possibilities of the machining process is new and inventive by itself. Further inventive aspects lie in the specific arrangement of physical elements, according to the preferred embodiments of the invention.

The present invention provides a cutting tool holder arrangement comprising a cutting tool holder; a cutting tool; a conduit provided through said cutting tool holder arrangement for the delivery of a cooling fluid to a cutting zone of the cutting tool. The arrangement is characterized in that a temperature sensor is provided in said cutting tool holder for establishing a temperature of said cooling fluid in said conduit. Preferably, pressure sensor is also provided in said cutting tool holder for establishing a pressure of said cooling fluid in said conduit. On the basis of the established temperature and optionally of the established pressure, the thermodynamic state of the cooling fluid (e.g. gaseous/liquid) can be assessed.

The invention further relates to the above described cutting tool holder arrangement, said arrangement further comprising a cutting tool clamp for fixing said cutting tool on said cutting tool holder, wherein at least part of said conduit is formed as a channel through said cutting tool clamp.

In a preferred embodiment of the invention, said arrangement further comprises a clamping screw for fixing said cutting tool clamp to the cutting tool holder, wherein at least part of said conduit is formed as a channel through said clamping screw.

In another preferred embodiment, said arrangement further comprises a nozzle arranged at a distal end of said conduit, wherein said nozzle is adapted for delivering cooling fluid to a cutting zone of, or a rake face of, said cutting tool. The "rake face", within the meaning of the invention, is the cutting tool surface adjacent the cutting edge which directs the flow of the chip away from the workpiece.

In another preferred embodiment, said nozzle is an opening in said cutting tool clamp.

In another preferred embodiment, said temperature sensor, and optionally a pressure sensor, is provided in a void, or bore, of said cutting tool holder.

In another preferred embodiment, said void is an elongated channel along a longitudinal axis of said cutting tool holder.

Preferably, the temperature sensor are provided at distal end of an elongated probe, said probe being arrangeable within said elongated channel of said cutting tool holder. Optionally, a pressure sensor may also be provided at a distal end of said elongated probe, or on a separate elongated probe.

In another preferred embodiment, said elongated channel is arranged centrally in said cutting tool holder.

In another preferred embodiment, said arrangement further comprises a pressure sensor for establishing a pressure of said cooling fluid in said conduit.

In another preferred embodiment, said temperature sensor, and optionally said pressure sensor, is connected to control means for controlling the flow of cooling fluid through the conduit.

In another preferred embodiment, said control means is adapted for establishing, on the basis of at least said established temperature, the phase of said cooling fluid in said conduit. In particular, it is established whether said cooling fluid is in a gaseous state or in a liquid state.

In another preferred embodiment, said cutting tool holder conforms to ANSI or ISO standards. This enables the use of cutting tool holders of the invention in standard machining tools.

In another preferred embodiment, said control means is adapted to stop the machining process when said cooling fluid in said conduit is in a substantially gaseous state. Likewise, said control means may be adapted to stop the machining process when said established temperature of the cooling fluid is above a predetermined threshold value.

In another preferred embodiment, said control means is adapted to increase the flow of cooling fluid through the conduit, if said cooling fluid in said conduit is in a substantially gaseous state. Likewise, said control means may be adapted to increase the flow of cooling fluid through conduit 1, 6, 13 if said established temperature of the cooling fluid is above a predetermined threshold value. This threshold value may be the boiling temperature of the cooling fluid e.g. the boiling temperature at a pressure present in the conduit. The boiling temperature at a specific pressure can be established, e.g., from the cooling fluid's phase diagram or corresponding formulae.

In preferred embodiments of the invention, the cooling fluid is liquid nitrogen.

The present invention also relates to methods of operating a machining tool comprising a cutting tool holder arrangement as defined above, said method comprising establishing a temperature of said cooling fluid in said conduit and controlling the flow of cooling fluid through the conduit on the basis of said established temperature, optionally in combination with said established pressure. The present invention also relates to corresponding methods of controlling the flow of cooling fluid towards a cutting zone of a machining tool.

In a preferred embodiment, the method comprises increasing the flow of cooling fluid through the conduit, if the established temperature is above a first predetermined threshold value.

In another preferred embodiment, said machining tool is stopped, if said established temperature is above a second predetermined threshold.

Optionally, a pressure within said conduit is also established. The flow of cooling fluid is then controlled on the basis of the established temperature and said established pressure.

### Short description of the figures

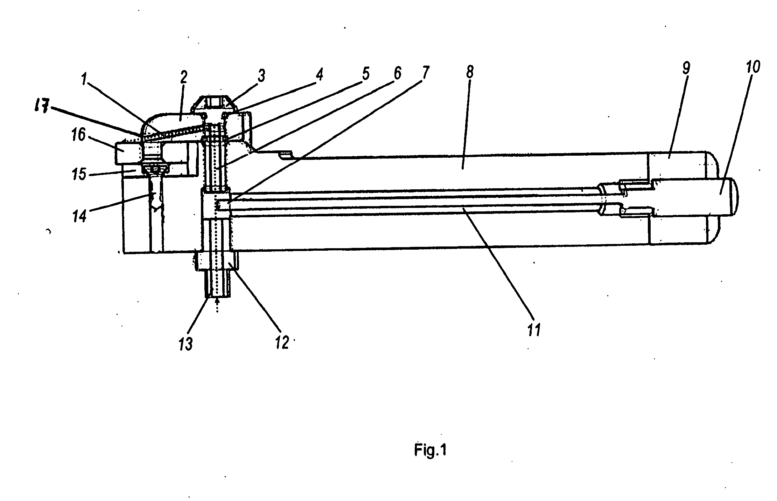

Figure 1 shows a cutting tool holder arrangement of the present invention.

### Detailed description of the invention

The invention shall now be explained with reference to the embodiment shown in Figure 1. The cutting tool holder arrangement comprises at least a cutting tool holder 8, a cutting tool 16, a conduit 1, 6, 13 provided through the cutting tool holder arrangement, and a temperature sensor 7. A pressure sensor may also be provided. The conduit is suitable for the delivery of a cooling fluid to a cutting zone of the cutting tool 16. Preferably, the cooling fluid is delivered to a rake face of the cutting tool 16. The temperature sensor 7 is positioned at an appropriate location within the cutting tool holder arrangement, said temperature sensor being adapted for establishing the temperature of the cooling fluid within the conduit 1, 6, 13. Optionally, the pressure sensor is provided at an appropriate location, for establishing a pressure of the cooling fluid within the conduit 1, 6, 13.

The established temperature, and optionally the established pressure, can be used to control the operation of the machining tool. In particular, the established temperature, and optionally the established pressure, can be used to establish, whether cryogenic cooling fluid is present in conduit 1, 6, 13 in gaseous or in liquid form. As mentioned above, delivery of cryogenic cooling fluid in liquid form is preferred, since liquid cooling fluid has greater cooling capacity and provides better lubrication. If a temperature below a predetermined threshold value is established, the control means may be programmed effect an increase of the flow of cooling fluid through conduit 1, 6, 13. The control means may also be programmed to stop the machining process, if the established temperature is above another predetermined threshold value.

A pressure sensor (not shown) may also be provided for establishing a pressure in the conduit 1, 6, 13. The established pressure can be used, e.g. in combination with the established temperature, to establish the thermodynamic state of the cooling fluid in conduit 1, 6, 13. In particular, it can be established whether the cooling fluid is in a gaseous or in a liquid state.

A signal provided by temperature sensor 7, and optionally by the pressure sensor, can be sent to a control means for controlling the operation of the machining tool. In one embodiment, the signal from temperature sensor 7, and optionally of the pressure sensor, can be used to control the flow of cooling fluid to conduit 1, 6, 13, and any conduit or tube which connects conduit 1, 6, 13 with a storage container for cooling fluid. Generally, a temperature of the cooling fluid in conduit 1, 6, 13 which is higher than the boiling temperature of said cooling fluid indicates that the cooling fluid is delivered to the cutting zone of a cutting tool 16 in gaseous form. In such cases, the control means is preferably adapted to increase the flow of cooling fluid through conduit 1, 6, 13.

The cutting tool holder 8 preferably assumes the shape of an elongated member preferably having a circular or a square cross sectional area, at least over a substantial part of its length (e.g. 60%, 80%, or 90% of its length). The cutting tool holder 8 is preferably adapted to cooperate with respective fixing means of the machining tool, for fixing the cutting tool holder 8 to the machining tool. In a more preferred embodiment, the cutting tool holder 8 conforms with at least one of ANSI and ISO standard nos. : DCLNR/L, DDJNR/L, DSBNR/L, DTGNR/L, CRDCR/L. This allows for clamping at least one of ANSI and ISO standard cutting tool inserts CNMG, SNMG, TNMG, RNMG, SNMA, CNGA, CCGW.

As shown in Figure 1, cutting tool holder 8 may have a central circular bore 11 along its longitudinal axis. This bore 11 serves to accommodate an elongated probe, on the distal end of which there is provided temperature sensor 7. Optionally, pressure sensor 7 is also provided on the elongated probe. The optional pressure sensor, however, can also be provided at different location along conduit 1, 6, 13. The elongated probe, at its proximal end 10, is preferably provided with electrical connectors for connecting to not shown control means.

A central bore along a longitudinal axis of cutting tool holder 8 provides for a mechanically very stable construction. A central bore has minimal detrimental effect on the flexural rigidity and torsional stiffness of the cutting tool holder. Providing the temperature sensor 7, and optionally a pressure sensor, at the distal end of an elongated probe within a central bore 11 of the cutting tool holder 8 furthermore provides for a space-saving and robust construction.

As can be seen in Figure 1, the cutting tool holder 16 is clamped and held in place by cutting tool clamp 2. More specifically, cutting tool 16 is clamped between cutting tool clamp 2 and supporting plate 15. Supporting plate 15 is held in place by supporting plate screw 14. Cutting tool clamp 2 is fixed to cutting tool holder 8 by clamping screw 3. An outer thread of clamping screw 3 engages with an inner thread of a radial bore in cutting tool holder 8. This radial bore is provided radially with respect to the longitudinal axis of cutting tool holder 8. It is preferably perpendicular to said bore along the longitudinal axis of cutting tool holder 8. At one end of the radial bore there is arranged coupling means 12 for coupling an external conduit or tube (not shown) to conduit 1, 6, 13. Coupling means 12 may be connected by screw coupling to cutting tool holder 8.

In the embodiment shown, coupling means 12 comprises a central bore which forms a first part 13 of conduit 1, 6, 13. A second part of conduit 1, 6, 13 may be formed by a central part of the radial bore through cutting tool holder 8. A third part 6 of conduit 1, 6, 13 may be formed by a longitudinal bore through a lower part of clamping screw 3. The longitudinal bore does not extend along the entire length of clamping screw 3. A radial bore in clamping screw 3 connects the longitudinal bore of clamping screw 3 with the exterior of clamping screw 3. The radial bore of clamping screw 3 opens, when assembled, into an annular clearance of a bore through cutting tool clamp 2. Cutting tool clamp 2 further comprises a channel 1 which opens on one side to the annular clearance, on the other side towards a cutting zone of cutting tool 16. Seals 4 and 5 are provided between clamping screw 3 and cutting tool clamp 2, for providing a sealed connection between the two. A sealed inner space is thereby created, including the annular clearance of clamping screw 3. Thereby is achieved a continuous and air-tight connection through inlet 13, cutting tool holder 8, clamping screw 3 and cutting tool clamp 2.

The distal end of conduit 1, 6, 13 acts as, and/or assumes the shape of, a nozzle 17 for providing cooling fluid to a cutting zone of cutting tool 16. Cooling fluid is preferably provided to a rake face of cutting tool 16.

The signal provided by temperature sensor 7, and optionally a signal provided from an optional pressure sensor, may be used to control the machining process. A relatively high temperature of the cooling fluid in conduit 1, 6, 13, e.g., above boiling point (which dependd on the current pressure), indicates that at least parts of the cooling fluid have evaporated upon transport from a storage container to conduit 1, 6, 13. A signal indicative of such a relatively high temperature in conduit 1, 6, 13 may thus be used to control the process such as to increase the flow of cooling fluid through the conduit. Increased flow leads to reduced residence time, thus to less evaporation of the cooling fluid upon transport.

The temperature established by temperature sensor 7 may also be used to detect faults in the supply of cooling fluid. A temperature above a certain threshold level may be used as an indication of impaired or interrupted flow of cooling fluid through conduit 1, 6, 13. The control system may use this signal for stopping the machining process.

**Reference numerals:**
- 1 -: conduit
- 2 -: cutting tool clamp
- 3 -: clamping screw
- 4 -: seal
- 5 -: seal
- 6 -: conduit
- 7 -: temperature sensor
- 8 -: cutting tool holder
- 9 -: end piece
- 10 -: sensor base
- 11 -: void
- 12 -: coupling means
- 13 -: inlet
- 14 -: supporting plate holding screw
- 15 -: supporting plate
- 16 -: cutting tool
- 17 -: nozzle

## Claims

1. A cutting tool holder arrangement comprising a cutting tool holder (8);
a cutting tool (16);
a conduit (1, 6, 13) provided through said cutting tool holder arrangement for the delivery of a cooling fluid to a cutting zone of the cutting tool (16);
**characterized in that**
a temperature sensor (7) is provided in said cutting tool holder (8) for establishing a temperature of said cooling fluid in said conduit (1, 6, 13).

2. The cutting tool holder arrangement of claim 1, said arrangement further comprising a cutting tool clamp (2) for fixing said cutting tool (16) on said cutting tool holder (8), wherein at least part of said conduit (1, 6, 13) is formed as a channel through said cutting tool clamp (2).

3. The cutting tool holder arrangement of claim 2, said arrangement further comprising a clamping screw (3) for fixing said cutting tool clamp (2) to said cutting tool holder (8), wherein at least part of said conduit (1, 6, 13) is formed as a channel through said clamping screw (3).

4. The cutting tool holder arrangement of any one of the above claims, said arrangement further comprising a nozzle (17) arranged at a distal end of said conduit (1, 6, 13), wherein said nozzle (17) is adapted for delivering cooling fluid to a cutting zone of said cutting tool (16).

5. The cutting tool holder arrangement of claim 4,
wherein said nozzle (17) is an opening in said cutting tool clamp (2).

6. The cutting tool holder arrangement of any one of the above claims, wherein said temperature sensor (7) is provided in a void (11) of said cutting tool holder (8).

7. The cutting tool holder arrangement of claim 6,
wherein said void is an elongated channel along a longitudinal axis of said cutting tool holder (8).

8. The cutting tool holder arrangement of claim 7,
wherein said temperature sensor is provided at a distal end of an elongated probe arranged in said elongated channel of said cutting tool holder (8), upon operation.

9. The cutting tool holder arrangement of any one of the above claims, wherein said arrangement further comprises a pressure sensor for establishing a pressure of said cooling fluid in said conduit (1, 6, 13).

10. The cutting tool holder arrangement of any one of the above claims, wherein said temperature sensor (7) is connected to control means for controlling the flow of cooling fluid through the conduit (1, 6, 13).

11. The cutting tool holder arrangement of claim 10,
wherein said control means is adapted for establishing, on the basis of at least said established temperature, the phase of said cooling fluid in said conduit.

12. The cutting tool holder arrangement of any one of the above claims, wherein said control means is adapted to stop the machining process when said cooling fluid in said conduit is in a substantially gaseous state.

13. A method of operating a machining tool comprising a cutting tool holder arrangement of any one of claims 1 to 12, said method comprising establishing a temperature of said cooling fluid in said conduit (1, 6, 13); and controlling the flow of cooling fluid through said conduit on the basis of said established temperature.

14. Method of claim 13, comprising increasing the flow of cooling fluid through said conduit (1, 6, 13), if the established temperature is above a first predetermined threshold value.

15. Method of claim 13 or 14, wherein said machining tool is stopped, if said established temperature is above a second predetermined threshold.

## Patentansprüche

1. Halteanordnung für Schneidwerkzeuge, umfassend einen Schneidwerkzeughalter (8);
ein Schneidwerkzeug (16);
eine Leitung (1, 6, 13), die durch die Halteanordnung für Schneidwerkzeuge zum Zuführen einer Kühlflüssigkeit zu einem Schneidbereich des Schneidwerkzeugs (16) vorgesehen ist;
**dadurch gekennzeichnet, dass**
ein Temperatursensor (7) in dem Schneidwerkzeughalter (8) zum Ermitteln einer Temperatur der Kühlflüssigkeit in der Leitung (1, 6, 13) vorgesehen ist.

2. Halteanordnung für Schneidwerkzeuge nach Anspruch 1, die Anordnung ferner umfassend eine Schneidwerkzeugklammer (2) zum Befestigen des Schneidwerkzeugs (16) an dem Schneidwerkzeughalter (8), wobei zumindest ein Teil der Leitung (1, 6, 13) als Kanal durch die Schneidwerkzeugklammer (2) ausgebildet ist.

3. Halteanordnung für Schneidwerkzeuge nach Anspruch 2, die Anordnung ferner umfassend eine Klemmschraube (3) zum Befestigen der Schneidwerkzeugklammer (2) an dem Schneidwerkzeughalter (8), wobei zumindest ein Teil der Leitung (1, 6, 13) als Kanal durch die Klemmschraube (3) ausgebildet ist.

4. Halteanordnung für Schneidwerkzeuge nach einem der vorhergehenden Ansprüche, die Anordnung ferner umfassend eine Düse (17), die am distalen Ende der Leitung (1, 6, 13) angeordnet ist, wobei die Düse (17) zum Zuführen von Kühlflüssigkeit zum Schneidbereich des Schneidwerkzeugs (16) eingerichtet ist.

5. Halteanordnung für Schneidwerkzeuge nach Anspruch 4, wobei die Düse (17) eine Öffnung in der Schneidwerkzeugklammer (2) ist.

6. Halteanordnung für Schneidwerkzeuge nach einem der vorhergehenden Ansprüche, wobei der Temperatursensor (7) in einem Hohlraum (11) des Schneidwerkzeughalters (8) vorgesehen ist.

7. Halteanordnung für Schneidwerkzeuge nach Anspruch 6, wobei der Hohlraum ein gestreckter Kanal entlang einer Längsachse des Schneidwerkzeughalters (8) ist.

8. Halteanordnung für Schneidwerkzeuge nach Anspruch 7, wobei der Temperatursensor an einem distalen Ende eines gestreckten Messfühlers vorgesehen ist, der beim Betrieb in dem gestreckten Kanal des Schneidwerkzeughalters (8) angeordnet ist.

9. Halteanordnung für Schneidwerkzeuge nach einem der vorhergehenden Ansprüche, wobei die Anordnung ferner einen Drucksensor zum Ermitteln eines Drucks der Kühlflüssigkeit in der Leitung (1, 6, 13) umfasst.

10. Halteanordnung für Schneidwerkzeuge nach einem der vorhergehenden Ansprüche, wobei der Temperatursensor (7) mit Regelmitteln zum Regeln des Stroms der Kühlflüssigkeit durch die Leitung (1, 6, 13) verbunden ist.

11. Halteanordnung für Schneidwerkzeuge nach Anspruch 10, wobei das Regelmittel zum Ermitteln, auf Grundlage von zumindest der eingerichteten Temperatur, der Phase der Kühlflüssigkeit in der Leitung geeignet ist.

12. Halteanordnung für Schneidwerkzeuge nach einem der vorhergehenden Ansprüche, wobei das Regelmittel zum Anhalten des Bearbeitungsprozesses eingerichtet ist, wenn die Kühlflüssigkeit in der Leitung in einem im Wesentlichen gasförmigen Zustand ist.

13. Verfahren zum Betreiben eines Bearbeitungswerkzeugs, das eine Halteanordnung für Schneidwerkzeuge nach einem der Ansprüche 1 bis 12 umfasst, das Verfahren umfassend das Ermitteln einer Temperatur der Kühlflüssigkeit in der Leitung (1, 6, 13); und das Regeln des Kühlflüssigkeitsstroms durch die Leitung auf Grundlage der ermittelten Temperatur.

14. Verfahren nach Anspruch 13, umfassend das Erhöhen des Kühlflüssigkeitsstroms durch die Leitung (1, 6, 13), falls die ermittelte Temperatur über einem ersten vorgegebenen Schwellenwert liegt.

15. Verfahren nach einem der Ansprüche 13 oder 14, wobei das Bearbeitungswerkzeug angehalten wird, wenn die ermittelte Temperatur über einem zweiten vorgegebenen Schwellenwert liegt.

## Revendications

1. Arrangement de support d'outil de découpage, comprenant :
un support d'outil de découpage (8) ;
un outil de découpage (16) ;
un conduit (1, 6, 13) passant à travers ledit arrangement de support d'outil de découpage, destiné à délivrer un fluide de refroidissement à une zone de découpage de l'outil de découpage (16) ;
**caractérisé en ce que**
un détecteur de température (7) est prévu dans ledit support d'outil de découpage (8) pour établir une température dudit fluide de refroidissement dans ledit conduit (1, 6, 13).

2. Arrangement de support d'outil de découpage selon la revendication 1, ledit arrangement comprenant en outre un collier de serrage (2) d'outil de découpage pour fixer ledit outil de découpage (16) sur ledit support d'outil de découpage (8), dans lequel au moins une partie dudit conduit (1, 6, 13) est formée comme un canal traversant ledit collier de serrage (2) d'outil de découpage.

3. Arrangement de support d'outil de découpage selon la revendication 2, ledit arrangement comprenant en outre une vis de serrage (3) pour fixer ledit collier de serrage (2) d'outil de découpage (8) audit support d'outil de découpage (8), dans lequel au moins une partie dudit conduit (1, 6, 13) est formée comme un canal traversant ladite vis de serrage (3).

4. Arrangement de support d'outil de découpage selon l'une quelconque des revendications précédentes, ledit arrangement comprenant en outre une buse (17) agencée à une extrémité distale dudit conduit (1, 6, 13), dans lequel ladite buse (17) est adaptée pour délivrer du fluide de refroidissement à une zone de découpage dudit outil de découpage (16).

5. Arrangement de support d'outil de découpage selon la revendication 4, dans lequel ladite buse (17) est une ouverture dans ledit collier de serrage (2) d'outil de découpage.

6. Arrangement de support d'outil de découpage selon l'une quelconque des revendications précédentes, dans lequel ledit détecteur de température (7) est prévu dans un espace vide (11) dudit support d'outil de découpage (8).

7. Arrangement de support d'outil de découpage selon la revendication 6, dans lequel ledit espace vide est un canal allongé le long d'un axe longitudinal dudit support d'outil de découpage (8).

8. Arrangement de support d'outil de découpage selon la revendication 7, dans lequel ledit détecteur de température est prévu à une extrémité distale d'une sonde allongée, agencée dans ledit canal allongé dudit support d'outil de découpage (8), lors du fonctionnement.

9. Arrangement de support d'outil de découpage selon l'une quelconque des revendications précédentes, dans lequel ledit arrangement comprend en outre un détecteur de pression pour établir une pression dudit fluide de refroidissement dans ledit conduit (1, 6, 13).

10. Arrangement de support d'outil de découpage selon l'une quelconque des revendications précédentes, dans lequel ledit détecteur de température (7) est relié à un moyen de contrôle pour contrôler l'écoulement dudit fluide de refroidissement à travers le conduit (1, 6, 13).

11. Arrangement de support d'outil de découpage selon la revendication 10, dans lequel ledit moyen de contrôle est adapté pour établir, sur la base d'au moins ladite température établie, la phase dudit fluide de refroidissement dans ledit conduit.

12. Arrangement de support d'outil de découpage selon l'une quelconque des revendications précédentes, dans lequel ledit moyen de contrôle est adapté pour stopper le processus d'usinage lorsque ledit fluide de refroidissement dans ledit conduit est dans un état substantiellement gazeux.

13. Méthode pour le fonctionnement d'un outil d'usinage comprenant un arrangement de support d'outil de découpage selon l'une quelconque des revendications 1 à 12, ladite méthode comprenant l'établissement d'une température dudit fluide de refroidissement dans ledit conduit (1, 6, 13) ; et le contrôle de l'écoulement du fluide de refroidissement à travers ledit conduit, sur la base de ladite température établie.

14. Méthode selon la revendication 13, comprenant l'augmentation de l'écoulement du fluide de refroidissement à travers ledit conduit (1, 6, 13), si la température établie est supérieure à une première valeur seuil prédéterminée.

15. Méthode selon la revendication 13 ou 14, dans laquelle ledit outil d'usinage est stoppé si ladite température établie est supérieure à une deuxième valeur seuil prédéterminée.
